# FASCICULE DE BREVET EUROPEEN

(11) **EP 3 339 182 B1**
(45) Date de publication et mention de la délivrance du brevet: **22.05.2019**
(21) Numéro de dépôt: 17203414.2
(22) Date de dépôt: 23.11.2017
(51) Int. Cl.: B64D 31/06, F02C 9/00

(54) **DISPOSITIF DE REGULATION DE LA VITESSE DE ROTATION D'UN ARBRE D'UN GENERATEUR DE GAZ DE TURBOMOTEUR DE GIRAVION, GIRAVION EQUIPE D'UN TEL DISPOSITIF ET METHODE DE REGULATION ASSOCIEE**
VORRICHTUNG ZUR REGULIERUNG DER DREHGESCHWINDIGKEIT EINER GASGENERATOR-WELLE EINES TURBOMOTORS EINES DREHFLÜGELFLUGZEUGS, DREHFLÜGELFLUGZEUG, DAS MIT EINER SOLCHEN VORRICHTUNG AUSGESTATTET IST, UND ENTSPRECHENDE REGULIERUNGSMETHODE
DEVICE FOR CONTROLLING THE ROTATIONAL SPEED OF A SHAFT OF A GAS GENERATOR OF A ROTORCRAFT TURBOSHAFT ENGINE, ROTORCRAFT PROVIDED WITH SUCH A DEVICE AND ASSOCIATED CONTROL METHOD

(30) Priorité: 22.12.2016 FR 1601829
(43) Date de publication de la demande: 27.06.2018
(73) Titulaire: Airbus Helicopters, 13725 Marignane Cedex (FR)
(72) Inventeur: TAHERI, Setareh, 13100 Aix en Provence (FR); CERTAIN, Nicolas, 13090 Aix en Provence (FR)
(74) Mandataire: GPI & Associés

(56) Documents cités:
- US-A1- 2014 200 790

## Description

La présente invention concerne un dispositif de régulation de la vitesse de rotation, dite vitesse de rotation NG, d'un arbre d'un générateur de gaz d'un turbomoteur d'un giravion. Une telle vitesse de rotation NG est ainsi directement fonction de la quantité de carburant injectée dans le turbomoteur pour produire une combustion destinée à entrainer en rotation au moins un rotor principal.

Le document US 2014/0200790 A1 montre une telle dispositif de régulation et divulgue le préambule de la revendication 1.

Ainsi, la présente invention est également du domaine des méthodes de régulation du fonctionnement d'un ou des turbomoteurs d'un groupe de motorisation équipant un giravion. Un tel groupe de motorisation comprend par exemple au moins un turbomoteur principal à combustion fournissant classiquement au giravion la puissance mécanique nécessaire pour procurer au moins l'entraînement d'un ou de plusieurs rotors équipant le giravion.

Par suite, la présente invention s'inscrit plus spécifiquement dans le cadre d'un dispositif et d'une méthode de régulation procurant l'entraînement à une vitesse de consigne variable d'au moins un rotor principal du giravion, voire aussi procurant le cas échéant l'entraînement d'un rotor anticouple.

Le ou les rotor(s) principal (principaux) procure(nt) typiquement au moins la sustentation du giravion, voire aussi sa propulsion et/ou son changement d'attitude en vol dans le cas spécifique d'un hélicoptère. Le rotor anticouple procure quant à lui typiquement une stabilisation et un guidage du giravion en lacet et est couramment formé d'un rotor arrière ou d'au moins une hélice propulsive dans le cas d'un giravion de type hybride pouvant évoluer à des vitesses élevées d'avancement.

Classiquement, le fonctionnement des turbomoteurs principaux du giravion est placé sous le contrôle d'une unité de régulation, telle qu'un FADEC (d'après l'acronyme anglais Full Authority Digital Engine Control). L'unité de régulation contrôle le dosage en carburant des turbomoteurs principaux en fonction d'une consigne de vitesse de rotation de l'arbre du générateur de gaz d'un turbomoteur par exemple, ci-après désignée par la vitesse de rotation NG, relative à une vitesse de rotation requise de l'arbre du générateur de gaz d'un turbomoteur. La consigne de la vitesse de rotation NG peut ainsi dans certains cas particuliers être générée par l'unité de régulation (FADEC). Dans d'autres cas particuliers où par exemple cette consigne est variable, elle peut être générée par l'ensemble des équipements électroniques, électriques et informatiques du giravion puis transmise à l'unité de régulation (FADEC) par des moyens de gestion, tels un AFCS (d'après l'acronyme anglais Automatic Flight Control System). Dans ce cas, l'unité de régulation (FADEC) permet d'effectuer une régulation de la vitesse de rotation NG.

Ainsi, la consigne de la vitesse de rotation NG peut être transmise par les moyens de gestion (AFCS) en fonction des besoins en puissance mécanique du giravion identifiée selon le cas de vol courant du giravion, et notamment en fonction des besoins en puissance mécanique pour entraîner le rotor principal. La puissance consommée par le rotor principal peut être par exemple identifiée à partir d'une évaluation d'une part du couple résistant que le rotor principal oppose à l'encontre de son entraînement par le groupe de motorisation et d'autre part de sa vitesse de rotation.

En outre, l'entraînement du rotor principal à une vitesse de rotation NR est directement fonction de la vitesse de rotation NG de l'arbre du générateur de gaz. La vitesse de rotation NG est alors commandée de manière variable par rapport à une vitesse nominale NGnom prédéfinie selon les conditions les plus critiques pour le giravion correspondant par exemple à des procédures complexes de décollage ou d'atterrissage ponctuelles couramment désignées par l'expression de "procédures CAT A".

En effet, une telle variation significative de la vitesse NG d'entraînement de l'arbre du générateur de gaz est exploitée pour optimiser le niveau de puissance fourni par le turbomoteur en fonction de la phase de vol associée, par exemple pour réduire les nuisances sonores à proximité du sol et/ou améliorer les performances. A titre indicatif, la vitesse de rotation NG de l'arbre du générateur de gaz peut être commandée variable entre 5% et 10% de la vitesse nominale NGnom, voire potentiellement davantage selon l'évolution des techniques, et plus particulièrement peut être commandée variable selon une plage de valeurs potentiellement comprise entre 90% et 115% de la vitesse nominale NGnom.

On pourra à ce propos se reporter par exemple à la publication « Enhanced energy maneuverability for attack helicopters using continuous variable rotor speed control » (C.G. SCHAEFER Jr ; F.H. LUTZE, Jr ; 47th forum American Helicopter Society 1991 ; p. 1293-1303). Selon ce document, les performances d'un giravion en situation de combat sont améliorées en faisant varier la vitesse d'entraînement du rotor principal selon une variation de la vitesse air du giravion.

On pourra aussi se reporter par exemple au document US 6 198 991 (YAMAKAWA et al.), qui propose de réduire les nuisances sonores générées par un giravion en approche d'un point de posé en faisant varier la vitesse de rotation du rotor principal.

On pourra encore à ce propos se reporter par exemple au document US2007/118254 (BARNES G.W. et al.), qui propose de faire varier la vitesse de rotation du rotor principal d'un giravion, selon deux valeurs considérées comme basse et haute, sous conditions prédéfinies de seuils de valeurs de divers paramètres liés à des conditions de vol du giravion préalablement identifiées.

Par exemple encore, on pourra aussi se reporter à ce propos au document WO2010/143051 (AGUSTA SPA et al.), qui propose de faire varier la vitesse de rotation d'un rotor principal équipant un giravion conformément à une cartographie préalablement établie selon diverses conditions de vol du giravion.

Enfin, il est également connu, tel que décrit par le Demandeur dans le document FR 3 000 466, d'utiliser un altimètre pour commander automatiquement une variation de la vitesse de rotation d'un rotor dans une plage comprise entre 90% et 110% d'une valeur nominale prédéterminée.

Par ailleurs, les documents FR 2 974 564, US 2014/200790, GB 2 192 163 et FR 2 981 045 décrivent quant à eux d'autres dispositifs ou méthodes de régulation de la vitesse de rotation d'un rotor principal ou rotor arrière pour giravion.

Cependant, si de tels documents décrivent des dispositifs ou des méthodes de régulation de la vitesse de rotation de l'arbre du générateur de gaz NG (ou par analogie de la vitesse de rotation du rotor NR) lors du vol d'un giravion, de tels documents n'apportent aucune solution permettant de réaliser une adaptation de la consigne de vitesse de rotation NG lors de phases de vol à faible puissance. Or, il existe deux situations principales pouvant amener un pilote de giravion à faire évoluer celui-ci à des niveaux de puissance faibles.

La première situation correspond au cas ou au moins un turbomoteur du giravion tombe subitement en panne entraînant ainsi une perte de puissance et donc une incapacité pour le turbomoteur en panne d'entraîner en rotation le (ou les) rotor(s) principal (principaux).

La deuxième situation est l'autorotation qui est une phase de vol qui peut être volontairement déclenchée par le pilote du giravion. Dans cette phase de vol, le rotor principal n'est plus entraîné par le (ou les) turbomoteur(s) : on parle alors de désynchronisation. Le rotor n'est plus entraîné en rotation par un turbomoteur mais par une inversion du flux d'air dans le rotor. Plus aucun couple moteur n'est alors transmis du turbomoteur au rotor. Une telle phase de vol permet alors de réaliser une descente contrôlée du giravion grâce à un pilotage adapté d'un pas collectif des pales du (ou des) rotor(s) principal (principaux).

De manière générale, une phase de vol en autorotation est utilisée en cas de panne du (ou des) turbomoteur(s) par un pilote pour conserver une vitesse de rotor principal suffisante, Celle phase de vol s'effectue alors en réduisant le pas collectif des pales du rotor principal lorsque la panne survient. Le passage à la phase de vol en autorotation est alors rendu possible grâce à une roue libre permettant de désaccoupler le rotor et le turbomoteur dans certaines conditions. Une telle roue libre est en effet une pièce de liaison mécanique entre la boite de transmission principale de puissance et le turbomoteur qui permet de transmettre la puissance du turbomoteur vers la boite de transmission principale de puissance tout en empêchant l'inverse.

En général, deux arbres emboités l'un dans l'autre et coaxiaux sont reliés entre eux par l'intermédiaire de cette roue libre. L'un des arbres est lié à la boite de transmission principale de puissance elle-même liée au rotor principal et l'autre arbre est quant à lui lié au turbomoteur. Ces deux arbres peuvent alors comporter un degré de liberté en rotation ou être solidaires l'un de l'autre. Dans le premier cas, le rotor et le turbomoteur sont dits « désynchronisés ». Cette désynchronisation se produit lorsque le couple transmis par le turbomoteur au rotor est nul.

Habituellement, un pilote procède donc à un atterrissage en autorotation lorsqu'une panne moteur survient. Cependant, une telle manoeuvre étant complexe à réaliser, il est nécessaire pour les pilotes de giravion de s'y entrainer régulièrement en simulant la panne de la motorisation.

De plus, lors de descente à forte vitesse verticale, par exemple lors d'approches à fortes pentes caractéristiques des giravions ou encore en présence de rafales de vent, le turbomoteur peut se désynchroniser de manière inopinée et surprendre le pilote. Lorsque le pilote ré-augmente manuellement la consigne de pas collectif des pales du rotor, le turbomoteur fournit de nouveau un couple non nul. Il se produit alors une chute de la vitesse de rotation du rotor NR à la resynchronisation des turbomoteurs (régulés sur une consigne de turbine libre, dite NTL, d'un turbomoteur) avec le rotor. Une telle chute de la vitesse de rotation NR peut alors atteindre plusieurs pourcents de la valeur nominale de la vitesse de rotation NRnom.

En outre, la généralisation de lois de régulation du régime rotor NR dites lois fortement variables pour des besoins de limitations acoustiques conduit les nouvelles générations de giravions à évoluer à des vitesses de rotation NR du rotor inférieures à leur niveau en vol stationnaire, et cela à partir d'une vitesse d'avancement en palier correspondant à la puissance minimale nécessaire au vol et habituellement désignée par l'abréviation Vy.

Pour une configuration de vol donnée, cette chute de la vitesse de rotation NR du rotor à la resynchronisation est alors d'autant plus gênante qu'elle se produit près du sol, zone de diminution de la vitesse de rotation NR du rotor pour répondre à des contraintes de niveau acoustique et où la vitesse de rotation NR du rotor est déjà réduite à une valeur pouvant atteindre par exemple jusqu'à 90% de la valeur nominale NRnom. Une telle chute amène alors transitoirement la vitesse de rotation NR à des niveaux très faibles, c'est-à-dire bien inférieurs à 97% de la valeur nominale NRnom et donc dangereux pour permettre un pilotage d'un giravion.

Le risque de désynchronisation non voulue lors d'opérations à forts taux de descente a conduit sur les giravions de générations récentes à l'affichage au pilote du pas collectif de désynchronisation sur un indicateur de première limitation, également appelé selon l'acronyme anglais FLI pour First Limit Indicator. Cependant, si le niveau d'activité du pilote est déjà élevé, ce qui est typiquement le cas lors des phases d'approches, celui-ci peut ne pas voir cet affichage car il doit intégrer de nombreuses autres indications visuelles ou encore porte son regard à l'extérieur du giravion lors de ce type de manoeuvre.

La présente invention a alors pour objet de proposer un dispositif permettant de s'affranchir des limitations mentionnées ci-dessus. En particulier, un but du dispositif ou de la méthode de régulation conforme à l'invention est donc de permettre une régulation automatique de la vitesse de rotation NG d'un arbre du générateur de gaz d'un turbomoteur de giravion lors des phases de vol à faible puissance.

L'invention concerne donc un dispositif de régulation d'une vitesse de rotation, dite vitesse de rotation NG, d'un arbre d'un générateur de gaz d'au moins un turbomoteur d'un giravion, un tel giravion comportant :
- au moins un rotor principal pour générer au moins une sustentation et/ou une propulsion du giravion dans les airs,
- un organe de commande d'un pas collectif des pales du (ou des) rotor(s) principal (principaux), l'organe de commande permettant de générer une consigne de commande du pas collectif pour piloter collectivement une orientation angulaire des pales par rapport à un moyeu du (ou des) rotor(s) principal (principaux),
- au moins un turbomoteur apte à entraîner en rotation le (ou les) rotor(s) principal (principaux), le (ou les) turbomoteur(s) produisant au moins temporairement un couple moteur TQ transmis au(x) rotor(s) principal (principaux), le couple moteur TQ étant apte à varier en fonction de la consigne de commande du pas collectif des pales du (ou des) rotor(s) principal (principaux), et
- des moyens de mesure permettant de mesurer à chaque instant une mesure du couple moteur TQ transmis par le (ou les) turbomoteur(s) au(x) rotor(s) principal (principaux).

Le dispositif de régulation génère alors au moins une loi de commande d'une consigne de commande de la vitesse de rotation NG de l'arbre du générateur de gaz du (ou des) turbomoteur(s), la (ou les) loi(s) de commande de la consigne de commande de la vitesse de rotation NG étant fonction d'une vitesse d'avancement du giravion suivant une direction sensiblement horizontale et d'une hauteur du giravion par rapport au sol.

Selon l'invention, un tel dispositif de régulation est remarquable en ce qu'il comporte :
- des moyens d'entrée connectés avec les moyens de mesure, les moyens d'entrée permettant au dispositif de régulation de recevoir et d'analyser la mesure du couple moteur TQ,
- au moins une unité de stockage pour mémoriser une première valeur de seuil TQ1 et une seconde valeur de seuil TQ2, la seconde valeur de seuil TQ2 étant choisie supérieure à la première valeur de seuil TQ1, et
- une unité de calcul pour comparer la mesure du couple moteur TQ avec les première et seconde valeurs de seuil TQ1 et TQ2, l'unité de calcul générant au moins deux lois de commande NG1 et NG2 de la consigne de commande de vitesse de rotation NG, ces au moins deux lois de commande NG1 et NG2 étant distinctes l'une de l'autre et fonction de la mesure du couple moteur TQ, une première loi de commande NG1 étant mise en oeuvre au moins lorsque la mesure du couple moteur TQ est inférieure à la première valeur de seuil TQ1 et une seconde loi de commande NG2 étant mise en oeuvre au moins lorsque la mesure du couple moteur TQ est supérieure à la seconde valeur de seuil TQ2.

Autrement dit, un tel dispositif de régulation permet de comparer constamment une valeur courante du couple moteur TQ avec les première et seconde valeurs de seuil TQ1 et TQ2 puis de modifier automatiquement la loi de commande de la consigne de commande de vitesse de rotation NG selon le cas de vol.

La première loi de commande NG1 peut ainsi permettre par exemple de remonter au moins temporairement lors des phases de vol à faible puissance, la consigne de commande de vitesse de rotation NG au niveau d'une valeur nominale lorsque le couple transmis par le turbomoteur au(x) rotor(s) principal (principaux) passe en dessous de la première valeur de seuil TQ1.

Inversement, la seconde loi de commande NG2 permet d'abaisser au moins temporairement lors des phases de vol à faible puissance, la consigne de commande de vitesse de rotation NG à un niveau inférieur à la valeur nominale, par exemple égale à 94% de la valeur nominale, lorsque le couple transmis par le turbomoteur au(x) rotor(s) principal (principaux) passe au dessus de la seconde valeur de seuil TQ2. Ainsi dans ce cas, seule la seconde loi de commande NG2 permet de répondre à des exigences de réduction de niveau acoustique en fonction de la hauteur du giravion par rapport au sol et d'une vitesse d'avancement du giravion suivant une direction sensiblement horizontale.

Ainsi, la seconde loi de commande NG2 sera préférentiellement la loi de commande mise en oeuvre par défaut car elle correspond aux phases de vol à la puissance normale distinctes des phases de vol à faible puissance. Par suite, la seconde loi de commande NG2 permet de limiter l'empreinte acoustique du giravion sur le milieu extérieur.

La première loi de commande NG1 n'est donc pas la loi de commande mise en oeuvre par défaut et peut alors être mise en oeuvre automatiquement et temporairement uniquement si une condition de vol à faible niveau de puissance, ou plus précisément de couple, se produit volontairement si celle-ci correspondant à un entraînement du pilote au vol en autorotation d'un giravion ou involontairement en cas de panne moteur par exemple.

Par ailleurs, les moyens de mesure du couple moteur sont généralement désignés par un "couplemètre" comportant avantageusement un capteur électromagnétique permettant de mesurer une déformation en torsion d'un arbre de transmission du couple moteur généré par le (ou les) turbomoteur(s) du giravion. Un tel capteur peut être une sonde à effet Hall générant des impulsions électromagnétiques dont la durée est fonction du positionnement relatif d'encoches et de dents complémentaires ménagées à la circonférence de deux pièces en regard, solidarisées respectivement avec deux extrémités d'un arbre de transmission du couple moteur.

Les moyens d'entrée sont quant à eux généralement formés par une carte électronique d'acquisition de données avec laquelle le capteur électromagnétique peut communiquer et transmettre un signal représentatif de sa mesure. De tels moyens d'entrée peuvent alors être connectés par voix filaire avec les moyens de mesure ou encore comporter un module de communication sans fil de manière à communiquer avec les moyens de mesure par un protocole de communication sans fil.

Avantageusement, la première valeur de seuil TQ1 peut être comprise entre 5 et 15% d'une valeur de couple maximale TQmax apte à être générée par le (ou les) turbomoteur(s).

Ainsi, une telle première valeur de seuil est apte à correspondre à une phase de vol proche des très faibles puissances, impliquant, si le pilote persiste dans sa manoeuvre, la désynchronisation entre le (ou les) turbomoteur(s) et le (ou les) rotor(s) principal (principaux). Il est alors certain de pouvoir détecter une situation de vol nécessitant de modifier la consigne de commande de vitesse de rotation NG. Cette modification permet alors soit d'alerter le pilote qu'il va bientôt atteindre cette désynchronisation si sa manoeuvre n'était pas volontaire, soit d'être en mesure d'anticiper et de pallier la chute de la vitesse de rotation NG de l'arbre du générateur de gaz qui se produira ensuite à la resynchronisation.

En pratique, la seconde valeur de seuil TQ2 peut être comprise entre 10 et 20% d'une valeur de couple maximale TQmax apte à être générée par le (ou les) turbomoteur(s).

De cette manière, la seconde valeur de seuil TQ2 est suffisamment importante pour identifier une phase de vol distincte et éloignée de l'instant de désynchronisation réalisée entre le (ou les) turbomoteur(s) et le (ou les) rotor(s) principal (principaux). Par suite, il est certain que le besoin nécessitant de modifier la consigne de commande de vitesse de rotation NG est écarté.

Selon un exemple particulier de réalisation de l'invention, le dispositif de régulation peut mettre en oeuvre la première loi de commande NG1 lorsque la mesure du couple moteur TQ passe en dessous de la première valeur de seuil TQ1 et tant que la mesure du couple moteur TQ reste en dessous de la seconde valeur de seuil TQ2.

En d'autres termes, la première loi de commande NG1 est mise en oeuvre pendant une durée indéterminée qui est fonction de la valeur courante du couple moteur TQ.

Selon une caractéristique avantageuse de l'invention, le dispositif de régulation peut mettre en oeuvre la seconde loi de commande NG2 lorsque la mesure du couple moteur TQ passe au dessus de la seconde valeur de seuil TQ2 et tant que la mesure du couple moteur TQ reste au dessus de la première valeur de seuil TQ1.

De manière analogue, la seconde loi de commande NG2 est mise en oeuvre pendant une durée indéterminée qui est fonction de la valeur courante du couple moteur TQ.

Comme déjà évoqué, l'invention se rapporte également à un giravion comportant :
- au moins un rotor principal pour générer au moins une sustentation et/ou une propulsion du giravion dans les airs,
- un organe de commande d'un pas collectif des pales du (ou des) rotor(s) principal (principaux), l'organe de commande permettant de générer une consigne de commande du pas collectif pour piloter collectivement une orientation angulaire des pales par rapport à un moyeu du (ou des) rotor(s) principal (principaux),
- au moins un turbomoteur apte à entraîner en rotation le (ou les) rotor(s) principal(s) principal (principaux), le (ou les) turbomoteur(s) produisant au moins temporairement un couple moteur TQ transmis au(x) rotor(s) principal (principaux), le couple moteur TQ étant apte à varier en fonction de la consigne de commande du pas collectif des pales du (ou des) rotor(s) principal (principaux),
- des moyens de mesure permettant de mesurer à chaque instant une mesure du couple moteur TQ transmis par le (ou les) turbomoteur(s) au(x) rotor(s) principal (principaux), et
- un dispositif de régulation générant au moins une loi de commande d'une consigne de commande d'une vitesse de rotation, dite vitesse de rotation NG, d'un arbre d'un générateur de gaz du (ou des) turbomoteur(s), la (ou les) loi(s) de commande de la consigne de commande de la vitesse de rotation NG étant fonction d'une vitesse d'avancement du giravion suivant une direction sensiblement horizontale et d'une hauteur du giravion par rapport au sol.

Selon l'invention, un tel giravion est remarquable en ce que le dispositif de régulation de la vitesse de rotation NG est tel que décrit précédemment.

L'invention se rapporte également à une méthode de régulation d'une vitesse de rotation, dite vitesse de rotation NG, d'un arbre d'un générateur de gaz d'au moins un turbomoteur d'un giravion, un tel giravion comportant :
- au moins un rotor principal pour générer au moins une sustentation et/ou une propulsion du giravion dans les airs,
- un organe de commande d'un pas collectif des pales du (ou des) rotor(s) principal (principaux), l'organe de commande permettant de générer une consigne de commande du pas collectif pour piloter collectivement une orientation angulaire des pales par rapport à un moyeu du (ou des) rotor(s) principal (principaux),
- au moins un turbomoteur apte à entraîner en rotation le (ou les) rotor(s) principal (principaux), le (ou les) turbomoteur(s) produisant au moins temporairement un couple moteur TQ transmis au(x) rotor(s) principal (principaux), le couple moteur TQ étant apte à varier en fonction de la consigne de commande du pas collectif des pales du (ou des) rotor(s) principal (principaux), et
- des moyens de mesure permettant de mesurer à chaque instant une mesure du couple moteur TQ transmis par le (ou les) turbomoteur(s) au(x) rotor(s) principal (principaux).

En outre, une telle méthode de régulation génère au moins une loi de commande d'une consigne de commande de la vitesse de rotation NG de l'arbre du générateur de gaz du (ou des) turbomoteur(s), la (ou les) loi(s) de commande de la consigne de commande de la vitesse de rotation NG étant fonction d'une vitesse d'avancement du giravion suivant une direction sensiblement horizontale et d'une hauteur du giravion par rapport au sol.

Selon l'invention, cette méthode de régulation est remarquable en ce qu'elle met en oeuvre :
- une étape de mémorisation pour mémoriser dans au moins une unité de stockage une première valeur de seuil TQ1 et une seconde valeur de seuil TQ2, la seconde valeur de seuil TQ2 étant choisie supérieure à la première valeur de seuil TQ1,
- une étape de réception pour recevoir la mesure du couple moteur TQ effectuée par les moyens de mesure,
- une étape de comparaison pour comparer la mesure du couple moteur TQ avec les première et seconde valeurs de seuil TQ1 et TQ2, et
- une étape de génération pour générer au moins deux lois de commande NG1 et NG2 de la consigne de commande de vitesse de rotation NG, les au moins deux lois de commande NG1 et NG2 étant distinctes l'une de l'autre et fonction de la mesure du couple moteur TQ, une première loi de commande NG1 étant mise en oeuvre au moins lorsque la mesure du couple moteur TQ est inférieure à la première valeur de seuil TQ1 et une seconde loi de commande NG2 étant mise en oeuvre au moins lorsque la mesure du couple moteur TQ est supérieure à la seconde valeur de seuil TQ2.

Autrement dit, l'étape de mémorisation consiste à implémenter dans une mémoire les valeurs de seuil TQ1 et TQ2. Ces valeurs de seuil TQ1 et TQ2 peuvent par exemple être des valeurs fixes ou encore variables et déterminées selon des lois fonction de paramètres extérieurs tels que la force du vent, la température de l'air ou encore la pression atmosphérique.

L'étape de réception de la mesure du couple moteur TQ permet quant à elle au dispositif de régulation de recevoir la valeur courante du couple moteur TQ qui est effectivement transmis par le (ou les) turbomoteur(s) au(x) rotor(s) principal (principaux).

L'étape de comparaison permet ensuite d'effectuer la comparaison entre cette valeur courante du couple moteur TQ avec les première et seconde valeurs de seuil TQ1 et TQ2.

Enfin, l'étape de génération permet de générer les première et seconde lois de commande NG1 et NG2 pour ensuite pouvoir les mettre en oeuvre individuellement en fonction de la mesure de la valeur courante du couple moteur TQ.

Avantageusement, la première valeur de seuil TQ1 peut être comprise entre 5 et 15% d'une valeur de couple maximale TQmax apte à être générée par le (ou les) turbomoteur(s). En revanche et comme déjà indiqué précédemment, la seconde valeur de seuil TQ2 peut être comprise entre 10 et 20% d'une valeur de couple maximale TQmax apte à être générée par le (ou les) turbomoteur(s).

Selon une caractéristique avantageuse de l'invention, la méthode de régulation peut mettre en oeuvre la première loi de commande NG1 lorsque la mesure du couple moteur TQ passe en dessous de la première valeur de seuil TQ1 et tant que la mesure du couple moteur TQ reste en dessous de la seconde valeur de seuil TQ2.

En d'autres termes, la première loi de commande NG1 est mise en oeuvre par la méthode de régulation pendant une durée indéterminée qui est fonction de la valeur courante du couple moteur TQ.

De même, la méthode de régulation peut mettre en oeuvre la seconde loi de commande NG2 lorsque la mesure du couple moteur TQ passe au dessus de la seconde valeur de seuil TQ2 et tant que la mesure du couple moteur TQ reste au dessus de la première valeur de seuil TQ1.

Par suite, la seconde loi de commande NG2 est mise en oeuvre par la méthode de régulation pendant une durée indéterminée qui est fonction de la valeur courante du couple moteur TQ.

L'invention et ses avantages apparaîtront avec plus de détails dans le cadre de la description qui suit avec des exemples donnés à titre indicatif mais non limitatif à l'appui des figures annexées dans lesquelles :
- la figure 1 est une représentation schématique en vue de côté d'un giravion conforme à l'invention,
- la figure 2 est un schéma de principe illustrant notamment un dispositif de régulation conforme à l'invention,
- la figure 3 des courbes illustrant une régulation de la vitesse de rotation NG d'un arbre d'un générateur de gaz d'un turbomoteur de giravion et une régulation correspondante de la vitesse de rotation NR d'un rotor, conformément à l'invention,
- la figure 4 est une représentation schématique d'une méthode de régulation conforme à l'invention.

Les éléments présents dans plusieurs figures distinctes sont affectés d'une seule et même référence.

Comme déjà évoqué précédemment, l'invention se rapporte au domaine des giravions comportant au moins un rotor principal permettant de réaliser au moins la sustentation du giravion.

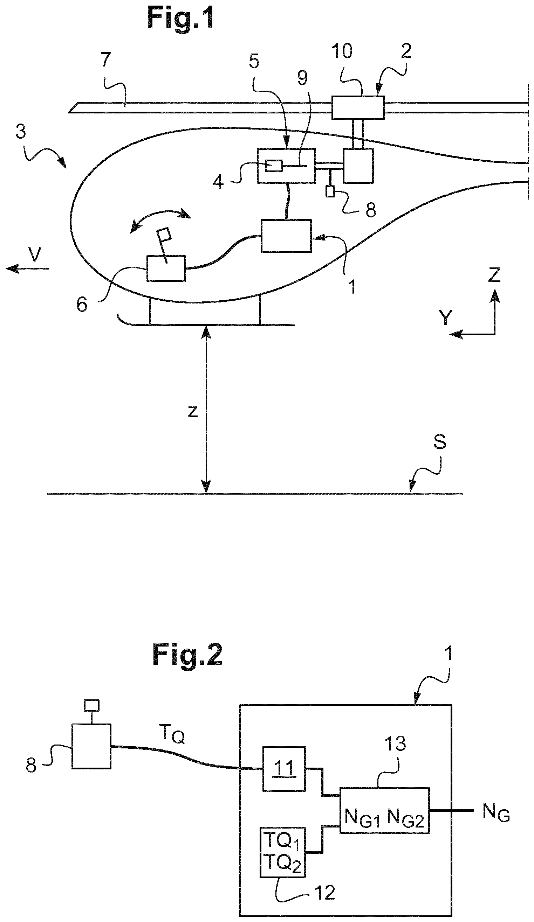

Tel que représenté à la figure 1, un tel giravion 3 comporte un dispositif de régulation 1 de la vitesse de rotation NG d'un arbre 9 d'un générateur de gaz 4. Un tel arbre 9 du générateur de gaz 4 est agencé à l'intérieur d'un turbomoteur 5 et permet d'entraîner en rotation une turbine libre solidaire d'un arbre de sortie pour entraîner en rotation au moins un rotor principal 2 du giravion 3. Ainsi, le turbomoteur 5, entraînant en rotation le rotor principal 2, transmet un couple moteur TQ qui peut être variable en fonction des conditions et des phases de vol.

Ce rotor principal comporte un moyeu 10 autour duquel émergent sensiblement radialement des pales 7. La rotation d'un tel rotor principal 2 permet ainsi de produire un flux d'air sensiblement vertical et ainsi de générer au moins une sustentation dans les airs du giravion 3.

Un pilotage de ce giravion 3 est rendu possible notamment grâce à un organe de commande 6 d'un pas collectif des pales 7 du rotor principal 2. Cet organe de commande 6 permet ainsi de générer une consigne de commande Cp du pas collectif et permet alors de modifier simultanément l'orientation angulaires des pales 7 par rapport au moyeu 10. La consigne de commande Cp du pas collectif des pales 7 permet notamment de faire varier le couple moteur TQ transmis par le turbomoteur 5 au rotor principal 2.

Des moyens de mesure 8 permettent alors de mesurer à tout moment une mesure du couple moteur TQ. De tels moyens de mesure 8 sont généralement formés par des capteurs électromagnétiques tels des couplemètres mesurant les déformations en torsion d'un arbre de sortie du turbomoteur 5.

Un tel dispositif de régulation 1 permet ainsi de générer au moins une loi de commande d'une consigne de la vitesse de rotation NG de l'arbre 9 du générateur de gaz 4 du turbomoteur 5, cette loi de commande étant fonction d'une part d'une vitesse d'avancement V du giravion 3 suivant une direction sensiblement horizontale Y et d'autre part d'une hauteur z du giravion par rapport au sol S. Une telle vitesse d'avancement V du giravion 3 est alors variable et peut dépasser une valeur de seuil prédéterminée Vy correspondant à une vitesse d'avancement particulière permettant au giravion de voler avec un niveau de puissance minimale du turbomoteur.

En effet pour limiter l'empreinte acoustique d'un giravion à une hauteur par rapport au sol inférieure à 600 pieds par exemple et lorsque la vitesse d'avancement V du giravion 3 est supérieure à la valeur de seuil prédéterminée Vy, il est avantageux de réduire la consigne de commande de la vitesse de rotation NG. Une telle réduction de la consigne de commande de la vitesse de rotation NG entraîne alors également une réduction du niveau sonore (décibels) généré par le giravion 3.

Par ailleurs tel que représenté à la figure 2, le dispositif de régulation 1 comporte des moyens d'entrée 11 connectés avec les moyens de mesure 8 permettant au dispositif de régulation 1 de recevoir et d'analyser la mesure du couple moteur TQ. De plus, le dispositif de régulation 1 comporte aussi au moins une unité de stockage 12 pour mémoriser une première valeur de seuil TQ1 et une seconde valeur de seuil TQ2. La seconde valeur de seuil TQ2 est choisie supérieure à la première valeur de seuil TQ1.

Un tel dispositif de régulation 1 comporte également une unité de calcul 13 pour comparer la mesure du couple moteur TQ avec les première et seconde valeurs de seuil TQ1 et TQ2. Cette unité de calcul 13 génère alors au moins deux lois de commande NG1 et NG2 de la consigne de commande de vitesse de rotation NG. Les au moins deux lois de commande NG1 et NG2 sont choisies distinctes l'une de l'autre et fonction de la mesure du couple moteur TQ. Une première loi de commande NG1 est ainsi mise en oeuvre au moins lorsque la mesure du couple moteur TQ est inférieure à la première valeur de seuil TQ1 et une seconde loi de commande NG2 est quant à elle mise en oeuvre au moins lorsque la mesure dudit couple moteur TQ est supérieure à la seconde valeur de seuil TQ2.

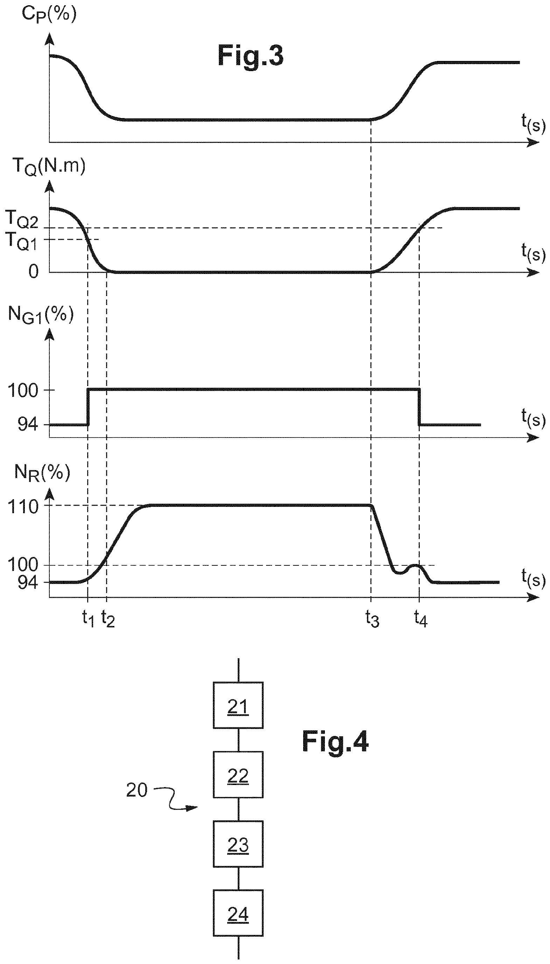

Comme déjà évoqué et tel que représenté à la figure 3, le couple moteur TQ est fonction, pour un même cas de vol, de la consigne de commande Cp du pas collectif des pales 7 du rotor principal 2.

Ainsi lorsque le pilote du giravion 3 commence à réduire la consigne de commande Cp du pas collectif des pales 7, le couple moteur TQ transmis au rotor principal 2 diminue également. A un instant t1, le couple moteur TQ est alors égal à la première valeur de seuil TQ1 puis il continue de décroitre en dessous de cette première valeur de seuil TQ1.

De même à l'instant t1, la loi de commande NG1 de la consigne de commande de vitesse de rotation NG passe alors automatiquement d'une valeur basse de 94% pour répondre à des exigences acoustiques à une valeur nominale de 100%.

A l'instant t2, le couple moteur TQ transmis au rotor principal 2 s'annule et commence alors une phase de désynchronisation entre le turbomoteur 5 et le rotor principal 2. Par ailleurs, une vitesse de rotation NR du rotor principal 2 continue quant à elle d'augmenter jusqu'à une valeur maximale pouvant par exemple correspondre à 110% de la valeur nominale. En effet, cette augmentation de la vitesse de rotation réelle NR du rotor principale 2 est générée par le flux d'air traversant le rotor qui est provoqué par la descente rapide du giravion 3.

Puis, à partir d'un instant t3, une action sur l'organe de commande 6 du pas collectif des pales 7 génère alors une augmentation de la consigne Cp du pas collectif et par suite une augmentation du couple moteur TQ transmis au rotor principal 2.

Toujours à partir de l'instant t3 la vitesse de rotation réelle NR du rotor principal 2 chute et le rotor principal 2 commence à être progressivement entraîné en rotation par le turbomoteur 5 vers une vitesse de rotation nominale de 100% empêchant transitoirement une chute de la vitesse de rotation réelle NR en dessous de la valeur minimale de 94% à laquelle le rotor principal 2 était entraîné initialement avant l'instant t1.

Enfin, à partir de l'instant t4, correspondant à une mesure du couple moteur TQ égale à la seconde valeur de seuil TQ2, la loi de commande NG1 de la consigne de la vitesse de rotation NG est alors diminuée depuis sa valeur nominale de 100% jusqu'à une valeur basse de 94% permettant une réduction du niveau sonore (décibels) produit par le giravion 3 en vol.

Telle que représentée à la figure 4, l'invention concerne également une méthode de régulation 20 permettant de générer au moins une loi de commande d'une consigne de commande de la vitesse de rotation NG de l'arbre 9 du générateur de gaz 4 du turbomoteur 5. Une telle loi de commande de la consigne de commande de la vitesse de rotation NG est fonction d'une vitesse d'avancement V du giravion 3 suivant une direction sensiblement horizontale et d'une hauteur z du giravion 3 par rapport au sol S.

Une telle méthode de régulation 20 met en oeuvre :
- une étape de mémorisation 21 pour mémoriser dans au moins une unité de stockage 12 une première valeur de seuil TQ1 et une seconde valeur de seuil TQ2, la seconde valeur de seuil TQ2 étant choisie supérieure à la première valeur de seuil TQ1,
- une étape de réception 22 pour recevoir la mesure du couple moteur TQ effectuée par les moyens de mesure 8,
- une étape de comparaison 23 pour comparer la mesure du couple moteur TQ avec les première et seconde valeurs de seuil TQ1 et TQ2, et
- une étape de génération 24 pour générer les au moins deux lois de commande NG1 et NG2 de la consigne de commande de vitesse de rotation NG.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention comme tel que définit par les revendications jointes.

## Revendications

1. Dispositif de régulation (1) d'une vitesse de rotation, dite vitesse de rotation NG, d'un arbre (9) d'un générateur de gaz (4) d'au moins un turbomoteur (5) d'un giravion (3), ledit giravion (3) comportant :
• au moins un rotor principal (2) pour générer au moins une sustentation et/ou une propulsion dudit giravion (3) dans les airs,
• un organe de commande (6) d'un pas collectif des pales (7) dudit au moins un rotor principal (2), ledit organe de commande (6) permettant de générer une consigne de commande Cp dudit pas collectif pour piloter collectivement une orientation angulaire des pales (7) par rapport à un moyeu (10) dudit au moins un rotor principal (2),
• au moins un turbomoteur (5) apte à entraîner en rotation ledit au moins un rotor principal (2), ledit au moins un turbomoteur (5) produisant au moins temporairement un couple moteur TQ transmis audit au moins un rotor principal (2), ledit couple moteur TQ étant apte à varier en fonction de ladite consigne de commande Cp dudit pas collectif des pales (7) dudit au moins un rotor principal (2), et
• des moyens de mesure (8) permettant de mesurer à chaque instant une mesure dudit couple moteur TQ transmis par ledit au moins un turbomoteur (5) audit au moins un rotor principal (2),
ledit dispositif de régulation (1) générant au moins une loi de commande d'une consigne de commande de ladite vitesse de rotation NG dudit arbre (9) dudit générateur de gaz (4) dudit au moins un turbomoteur (5), ladite au moins une loi de commande de ladite consigne de commande de la vitesse de rotation NG étant fonction d'une vitesse d'avancement V dudit giravion (3) suivant une direction Y sensiblement horizontale et d'une hauteur z dudit giravion (3) par rapport au sol S,
**caractérisé en ce que** ledit dispositif de régulation (1) comporte :
• des moyens d'entrée (11) connectables avec les moyens de mesure (8), lesdits moyens d'entrée (11) permettant audit dispositif de régulation (1) de recevoir et d'analyser ladite mesure dudit couple moteur TQ,
• au moins une unité de stockage (12) pour mémoriser une première valeur de seuil TQ1 dudit couple moteur et une seconde valeur de seuil TQ2 dudit couple moteur, ladite seconde valeur de seuil TQ2 étant choisie supérieure à ladite première valeur de seuil TQ1, et
• une unité de calcul (13) pour comparer ladite mesure dudit couple moteur TQ avec lesdites première et seconde valeurs de seuil TQ1 et TQ2, ladite unité de calcul (13) générant au moins deux lois de commande NG1 et NG2 de ladite consigne de commande de vitesse de rotation NG, lesdites au moins deux lois de commande NG1 et NG2 étant distinctes l'une de l'autre et fonction de ladite mesure dudit couple moteur TQ, une première loi de commande NG1 étant mise en oeuvre au moins lorsque ladite mesure dudit couple moteur TQ est inférieure à ladite première valeur de seuil TQ1 et une seconde loi de commande NG2 étant mise en oeuvre au moins lorsque ladite mesure dudit couple moteur TQ est supérieure à ladite seconde valeur de seuil TQ2.

2. Dispositif selon la revendication 1,
**caractérisé en ce que** ladite première valeur de seuil TQ1 est comprise entre 5 et 15% d'une valeur de couple maximale TQmax apte à être générée par ledit au moins un turbomoteur (5).

3. Dispositif selon l'une quelconque des revendications 1 à 2, **caractérisé en ce que** ladite seconde valeur de seuil TQ2 est comprise entre 10 et 20% d'une valeur de couple maximale TQmax apte à être générée par ledit au moins un turbomoteur (5).

4. Dispositif selon l'une quelconque des revendications 1 à 3, **caractérisé en ce que** ledit dispositif de régulation (1) met en oeuvre ladite première loi de commande NG1 lorsque ladite mesure dudit couple moteur TQ passe en dessous de ladite première valeur de seuil TQ1 et tant que ladite mesure dudit couple moteur TQ reste en dessous de ladite seconde valeur de seuil TQ2.

5. Dispositif selon l'une quelconque des revendications 1 à 4, **caractérisé en ce que** ledit dispositif de régulation (1) met en oeuvre ladite seconde loi de commande NG2 lorsque ladite mesure dudit couple moteur TQ passe au dessus de ladite seconde valeur de seuil TQ2 et tant que ladite mesure dudit couple moteur TQ reste au dessus de ladite première valeur de seuil TQ1.

6. Giravion (3) comportant :
• au moins un rotor principal (2) pour générer au moins une sustentation et/ou une propulsion dudit giravion (3) dans les airs,
• un organe de commande (6) d'un pas collectif des pales (7) dudit au moins un rotor principal (2), ledit organe de commande (6) permettant de générer une consigne de commande Cp dudit pas collectif pour piloter collectivement une orientation angulaire des pales (7) par rapport à un moyeu (10) dudit au moins rotor principal (2),
• au moins un turbomoteur (5) apte à entraîner en rotation ledit au moins un rotor principal (2), ledit au moins un turbomoteur (5) produisant au moins temporairement un couple moteur TQ transmis audit au moins un rotor principal (2), ledit couple moteur TQ étant apte à varier en fonction de ladite consigne de commande Cp dudit pas collectif des pales (7) dudit au moins un rotor principal (2),
• des moyens de mesure (8) permettant de mesurer à chaque instant une mesure dudit couple moteur TQ transmis par ledit au moins un turbomoteur (5) audit au moins un rotor principal (2), et
• un dispositif de régulation (1) générant au moins une loi de commande d'une consigne de commande d'une vitesse de rotation, dite vitesse de rotation NG, d'un arbre (9) d'un générateur de gaz (4) dudit au moins un turbomoteur (5), ladite au moins une loi de commande de ladite consigne de commande de la vitesse de rotation NG étant fonction d'une vitesse d'avancement V dudit giravion (3) suivant une direction sensiblement horizontale Y et d'une hauteur z dudit giravion (3) par rapport au sol S,
**caractérisé en ce que** ledit dispositif de régulation (1) de la vitesse de rotation NG est selon l'une quelconque des revendications 1 à 5.

7. Méthode de régulation (20) d'une vitesse de rotation, dite vitesse de rotation NG, d'un arbre (9) d'un générateur de gaz (4) d'au moins un turbomoteur (5) d'un giravion (3), ledit giravion (3) comportant :
• au moins un rotor principal (2) pour générer au moins une sustentation et/ou une propulsion dudit giravion (3) dans les airs,
• un organe de commande (6) d'un pas collectif des pales (7) dudit au moins un rotor principal (2), ledit organe de commande (6) permettant de générer une consigne de commande Cp dudit pas collectif pour piloter collectivement une orientation angulaire des pales (7) par rapport à un moyeu (10) dudit au moins rotor principal (2),
• au moins un turbomoteur (5) apte à entraîner en rotation ledit au moins un rotor principal (2) pour générer au moins une sustentation et/ou une propulsion dudit giravion (3), ledit au moins un turbomoteur (5) produisant au moins temporairement un couple moteur TQ transmis audit au moins un rotor principal (2), ledit couple moteur TQ étant apte à varier en fonction de ladite consigne de commande Cp dudit pas collectif des pales (7) dudit au moins un rotor principal (2), et
• des moyens de mesure (8) permettant de mesurer à chaque instant une mesure dudit couple moteur TQ transmis par ledit au moins un turbomoteur (5) audit au moins un rotor principal (2),
ladite méthode de régulation (20) générant au moins une loi de commande d'une consigne de commande de ladite vitesse de rotation NG dudit arbre (9) dudit générateur de gaz (4) dudit au moins un turbomoteur (5), ladite au moins une loi de commande de ladite consigne de commande de la vitesse de rotation NG étant fonction d'une vitesse d'avancement V dudit giravion (3) suivant une direction sensiblement horizontale et d'une hauteur z dudit giravion (3) par rapport au sol S,
**caractérisée en ce que** ladite méthode de régulation (20) met en oeuvre :
• une étape de mémorisation (21) pour mémoriser dans au moins une unité de stockage (12) une première valeur de seuil TQ1 dudit couple moteur et une seconde valeur de seuil TQ2 dudit couple moteur, ladite seconde valeur de seuil TQ2 étant choisie supérieure à ladite première valeur de seuil TQ1,
• une étape de réception (22) pour recevoir ladite mesure dudit couple moteur TQ effectuée par lesdits moyens de mesure (8),
• une étape de comparaison (23) pour comparer ladite mesure dudit couple moteur TQ avec lesdites première et seconde valeurs de seuil TQ1 et TQ2, et
• une étape de génération (24) pour générer au moins deux lois de commande NG1 et NG2 de ladite consigne de commande de vitesse de rotation NG, lesdites au moins deux lois de commande NG1 et NG2 étant distinctes l'une de l'autre et fonction de ladite mesure dudit couple moteur TQ, une première loi de commande NG1 étant mise en oeuvre au moins lorsque ladite mesure dudit couple moteur TQ est inférieure à ladite première valeur de seuil TQ1 et une seconde loi de commande NG2 étant mise en oeuvre au moins lorsque ladite mesure dudit couple moteur TQ est supérieure à ladite seconde valeur de seuil TQ2.

8. Méthode selon la revendication 7,
**caractérisée en ce que** ladite première valeur de seuil TQ1 est comprise entre 5 et 15% d'une valeur de couple maximale TQmax apte à être générée par ledit au moins un turbomoteur (5).

9. Méthode selon l'une quelconque des revendications 7 à 8, **caractérisée en ce que** ladite seconde valeur de seuil TQ2 est comprise entre 10 et 20% d'une valeur de couple maximale TQmax apte à être générée par ledit au moins un turbomoteur (5).

10. Méthode selon l'une quelconque des revendications 7 à 9,
**caractérisée en ce que** ladite méthode de régulation (20) met en oeuvre ladite première loi de commande NG1 lorsque ladite mesure dudit couple moteur TQ passe en dessous de ladite première valeur de seuil TQ1 et tant que ladite mesure dudit couple moteur TQ reste en dessous de ladite seconde valeur de seuil TQ2.

11. Méthode selon l'une quelconque des revendications 7 à 10,
**caractérisée en ce que** ladite méthode de régulation (20) met en oeuvre ladite seconde loi de commande NG2 lorsque ladite mesure dudit couple moteur TQ passe au dessus de ladite seconde valeur de seuil TQ2 et tant que ladite mesure dudit couple moteur TQ reste au dessus de ladite première valeur de seuil TQ1.

## Patentansprüche

1. Vorrichtung (1) zum Regeln einer Drehzahl, als Drehzahl NG bezeichnet, einer Welle (9) eines Gasgenerators (4) mindestens eines Turbomotors (5) eines Drehflüglers (3), wobei der Drehflügler (3) umfasst:
- mindestens einen Hauptrotor (2) zum Erzeugen mindestens eines Auftriebs und/oder Antriebs des Drehflüglers (3) in der Luft,
- ein Steuerelement (6) für eine kollektive Neigung der Blätter (7) des mindestens einen Hauptrotors (2), wobei das Steuerelement (6) es ermöglicht, eine Steueranweisung Cp für die kollektive Neigung zu erzeugen, um gemeinsam eine Winkelorientierung der Blätter (7) in Bezug auf eine Nabe (10) des mindestens einen Hauptrotors (2) zu steuern,
- mindestens einen Turbomotor (5), der in der Lage ist, den mindestens einen Hauptrotor (2) drehanzutreiben, wobei der mindestens eine Turbomotor (5) mindestens vorübergehend ein auf den mindestens einen Hauptrotor (2) übertragenes Motordrehmoment TQ erzeugt, wobei das Motordrehmoment TQ in der Lage ist, gemäß der Steueranweisung Cp für die gemeinsame Neigung der Blätter (7) des mindestens einen Hauptrotors (2) zu variieren, und
- Messmittel (8), die es ermöglichen, zu jedem Zeitpunkt einen Messwert des von dem mindestens einen Turbomotor (5) auf den mindestens einen Hauptrotor (2) übertragenen Motordrehmoments TQ zu messen,
wobei die Steuervorrichtung (1) mindestens eine Steuerregel für eine Steueranweisung für die Drehzahl NG der Welle (9) des Gasgenerators (4) des mindestens einen Turbomotors (5) erzeugt, wobei die mindestens eine Steuerregel für die Steueranweisung für die Drehzahl NG eine Funktion einer Vorwärtsgeschwindigkeit V des Drehflüglers (3) in einer im Wesentlichen horizontalen Y-Richtung und einer Höhe z des Drehflüglers (3) relativ zum Boden S ist,
**dadurch gekennzeichnet, dass** die Steuervorrichtung (1) umfasst:
- Eingabemittel (11), die mit den Messmitteln (8) verbindbar sind, wobei die Eingabemittel (11) es der Regelvorrichtung (1) ermöglichen, den Messwert des Motordrehmoments TQ zu empfangen und zu analysieren,
- mindestens eine Speichereinheit (12) zum Speichern eines ersten Schwellenwerts TQ1 des Motordrehmoments und eines zweiten Schwellenwerts TQ2 des Motordrehmoments, wobei der zweite Schwellenwert TQ2 höher als der erste Schwellenwert TQ 1 gewählt ist, und
- eine Recheneinheit (13) zum Vergleichen des Messwertes des Motordrehmoments TQ mit dem ersten und dem zweiten Schwellenwert TQ1 und TQ2, wobei die Recheneinheit (13) mindestens zwei Steuerregeln NG1 und NG2 für die Steueranweisung der Drehzahl NG erzeugt, wobei die mindestens zwei Steuerregeln NG1 und NG2 voneinander verschieden und von dem Messwert des Motordrehmoments TQ abhängig sind, wobei eine erste Steuerregel NG1 zumindest dann angewandt wird, wenn der Messwert des Motordrehmoments TQ niedriger als der erste Schwellenwert TQ 1 ist und eine zweite Steuerregel NG2 zumindest dann angewandt wird, wenn der Messwert des Motordrehmoments TQ höher als der zweite Schwellenwert TQ2 ist.

2. Vorrichtung nach Anspruch 1,
**dadurch gekennzeichnet, dass** der erste Schwellenwert TQ 1 zwischen 5 und 15% eines maximalen Drehmomentwertes TQmax liegt, der durch den mindestens einen Turbomotor (5) erzeugbar ist.

3. Vorrichtung nach einem der Ansprüche 1 bis 2,
**dadurch gekennzeichnet, dass** der zweite Schwellenwert TQ2 zwischen 10 und 20% eines maximalen Drehmomentwertes TQmax liegt, der durch den mindestens einen Turbomotor (5) erzeugbar ist.

4. Vorrichtung nach einem der Ansprüche 1 bis 3,
**dadurch gekennzeichnet, dass** die Steuervorrichtung (1) die erste Steuerregel NG1 anwendet, wenn der Messwert des Motordrehmoments TQ unter den ersten Schwellenwert TQ 1 fällt und solange der Messwert des Motordrehmoments TQ unterhalb des zweiten Schwellenwerts TQ2 bleibt.

5. Vorrichtung nach einem der Ansprüche 1 bis 4,
**dadurch gekennzeichnet, dass** die Steuervorrichtung (1) die zweite Steuerregel NG2 anwendet, wenn der Messwert des Motordrehmoments TQ über dem zweiten Schwellenwert TQ2 steigt und solange der Messwert des Motordrehmoments TQ oberhalb des ersten Schwellenwerts TQ1 bleibt.

6. Drehflügler (3), umfassend:
- mindestens einen Hauptrotor (2) zum Erzeugen mindestens eines Auftriebs und/oder Antriebs des Drehflüglers (3) in der Luft,
- ein Steuerelement (6) für eine kollektive Neigung der Blätter (7) des mindestens einen Hauptrotors (2), wobei das Steuerelement (6) es ermöglicht, eine Steueranweisung Cp der kollektiven Neigung zu erzeugen, um gemeinsam eine Winkelorientierung der Blätter (7) in Bezug auf eine Nabe (10) des mindestens einen Hauptrotors (2) zu steuern,
- mindestens einen Turbomotor (5), der in der Lage ist, den mindestens einen Hauptrotor (2) drehanzutreiben, wobei der mindestens eine Turbomotor (5) mindestens vorübergehend ein auf den mindestens einen Hauptrotor (2) übertragenes Motordrehmoment TQ erzeugt, wobei das Motordrehmoment TQ in der Lage ist, gemäß der Steueranweisung Cp der gemeinsamen Neigung der Blätter (7) des mindestens einen Hauptrotors (2) zu variieren,
- Messmittel (8) zum jederzeitigen Messen eines Messwertes des Motordrehmoments TQ, das von dem mindestens einen Turbomotor (5) auf den mindestens einen Hauptrotor (2) übertragen wird, und
- eine Regelvorrichtung (1), die mindestens eine Steuerregel für eine Steueranweisung für eine Drehzahl, als Drehzahl NG bezeichnet, einer Welle (9) eines Gasgenerators (4) des mindestens einen Turbowellenmotors (5) erzeugt,
wobei die mindestens eine Steuerregel der Steueranweisung der Drehzahl NG eine Funktion einer Vorwärtsgeschwindigkeit V des Drehflüglers (3) in einer im Wesentlichen horizontalen Richtung Y und einer Höhe z des Drehflüglers (3) in Bezug auf den Boden S ist,
**dadurch gekennzeichnet, dass** die Geschwindigkeitssteuervorrichtung (1) der Drehzahl NG nach einem der Ansprüche 1 bis 5 ist.

7. Verfahren zum Regeln (20) einer Drehzahl, als Drehzahl NG bezeichnet, einer Welle (9) eines Gasgenerators (4) mindestens eines Turbomotors (5) eines Drehflüglers (3), wobei der Drehflügler (3) umfasst:
- mindestens einen Hauptrotor (2) zum Erzeugen mindestens eines Auftriebs und/oder Antriebs des Drehflüglers (3) in der Luft,
- ein Steuerelement (6) für eine kollektive Neigung der Blätter (7) des mindestens einen Hauptrotors (2), wobei das Steuerelement (6) es ermöglicht, eine Steueranweisung Cp für die kollektive Neigung zu erzeugen, um gemeinsam eine Winkelorientierung der Blätter (7) in Bezug auf eine Nabe (10) des mindestens einen Hauptrotors (2) zu steuern,
- mindestens einen Turbomotor (5), der in der Lage ist, den mindestens einen Hauptrotor (2) drehanzutreiben, um mindestens einen Auftrieb und/oder Antrieb des Drehflüglers (3) zu erzeugen, wobei der mindestens eine Turbowellenmotor (5) mindestens vorübergehend ein auf den mindestens einen Hauptrotor (2) übertragenes Motordrehmoment TQ erzeugt, wobei das Motordrehmoment TQ in der Lage ist, gemäß der Steueranweisung Cp für die gemeinsame Neigung der Blätter (7) des mindestens einen Hauptrotors (2) zu variieren; und
- Messmittel (8) die es ermöglichen, zu jedem Zeitpunkt einen Messwert des von dem mindestens einen Turbomotor (5) auf den mindestens einen Hauptrotor (2) übertragenen Motordrehmoments TQ zu messen,
wobei das Steuerverfahren (20) mindestens eine Steuerregel für eine Steueranweisung für die Drehzahl NG der Welle (9) des Gasgenerators (4) des mindestens einen Turbomotors (5) erzeugt, wobei die mindestens eine Steuerregel für die Steueranweisung für die Drehzahl NG eine Funktion einer Vorwärtsgeschwindigkeit V des Drehflüglers (3) in einer im Wesentlichen horizontalen Richtung und einer Höhe z des Drehflüglers (3) relativ zum Boden S ist,
**dadurch gekennzeichnet, dass** das Steuerverfahren (20) anwendet:
- einen Speicherschritt (21) zum Speichern eines ersten Schwellenwerts TQ1 des Motordrehmoments und eines zweiten Schwellenwerts TQ2 des Motordrehmoments, wobei der zweite Schwellenwert TQ2 höher als der erste Schwellenwert TQ 1 gewählt ist,
- einen Empfangsschritt (22) zum Empfangen des Messwertes des Motordrehmoments TQ durch die Messmittel (8),
- einen Vergleichsschritt (23) zum Vergleichen des Messwerts des Motordrehmoments TQ mit dem ersten und dem zweiten Schwellenwert TQ1 und TQ2, und
- einen Erzeugungsschritt (24) zum Erzeugen von mindestens zwei Steuerregeln NG1 und NG2 der Steueranweisung der Drehzahl NG, wobei die mindestens zwei Steuerregeln NG1 und NG2 voneinander verschieden und abhängig von dem Messwert des Motordrehmoments TQ sind, wobei
eine erste Steuerregel NG1 zumindest dann angewandt wird, wenn der Messwert des Motordrehmoments TQ niedriger als der erste Schwellenwert TQ1 ist, und eine zweite Steuerregel NG2 zumindest dann angewandt wird, wenn die Messung des Motordrehmoments TQ höher als der zweite Schwellenwert TQ2 ist.

8. Verfahren nach Anspruch 7,
**dadurch gekennzeichnet, dass** der erste Schwellenwert TQ 1 zwischen 5 und 15% eines maximalen Drehmomentwertes TQmax liegt, der durch den mindestens einen Turbomotor (5) erzeugbar ist.

9. Verfahren nach einem der Ansprüche 7 bis 8,
**dadurch gekennzeichnet, dass** der zweite Schwellenwert TQ2 zwischen 10 und 20% eines maximalen Drehmomentwertes TQmax liegt, der durch den mindestens einen Turbomotor (5) erzeugbar ist.

10. Verfahren nach einem der Ansprüche 7 bis 9,
**dadurch gekennzeichnet, dass** das Steuerverfahren (20) die erste Steuerregel NG1 anwendet, wenn der Messwert des Motordrehmoments TQ unter den ersten Schwellenwert TQ1 fällt und solange der Messwert des Motordrehmoments TQ unter dem zweiten Schwellenwert TQ2 bleibt.

11. Verfahren nach einem der Ansprüche 7 bis 10,
**dadurch gekennzeichnet, dass** das Steuerverfahren (20) die zweite Steuerregel NG2 anwendet, wenn der Messwert des Motordrehmoments TQ über den zweiten Schwellenwert TQ2 steigt und solange der Messwert des Motordrehmoments TQ über dem ersten Schwellenwert TQ 1 bleibt.

## Claims

1. Device (1) for regulating a rotational speed, referred to as rotational speed NG, of a shaft (9) of a gas generator (4) of at least one turboshaft engine (5) of a rotorcraft (3), said rotorcraft (3) comprising:
- at least one main rotor (2) for generating at least lift and/or propulsion of said rotorcraft (3) in the air,
- a member (6) for controlling a collective pitch of the blades (7) of said at least one main rotor (2), said control member (6) allowing a control setpoint Cp of said collective pitch to be generated in order to collectively control an angular orientation of the blades (7) with respect to a hub (10) of said at least one main rotor (2),
- at least one turboshaft engine (5) that can rotate said at least one main rotor (2), said at least one turboshaft engine (5) at least temporarily producing an engine torque TQ that is transmitted to said at least one main rotor (2), said engine torque TQ being variable according to said control setpoint Cp of said collective pitch of the blades (7) of said at least one main rotor (2), and
- measuring means (8) for taking, at any time, a measurement of said engine torque TQ transmitted by said at least one turboshaft engine (5) to said at least one main rotor (2),
said regulation device (1) generating at least one law for controlling a control setpoint of said rotational speed NG of said shaft (9) of said gas generator (4) of said at least one turboshaft engine (5), said at least one law for controlling said control setpoint of the rotational speed NG being dependent on a travel speed V of said rotorcraft (3) in a substantially horizontal direction Y and on a height z of said rotorcraft (3) with respect to the ground S,
**characterised in that** said regulation device (1) comprises:
- input means (11) that can be connected to the measuring means (8), said input means (11) allowing said regulation device (1) to receive and analyse said measurement of said engine torque TQ,
- at least one storage unit (12) for storing a first threshold value TQ1 of said engine torque and a second threshold value TQ2 of said engine torque, said second threshold value TQ2 being selected so as to be greater than said first threshold value TQ1, and
- a calculation unit (13) for comparing said measurement of said engine torque TQ with said first and second threshold values TQ1 and TQ2, said calculation unit (13) generating at least two laws NG1 and NG2 for controlling said control setpoint of rotational speed NG, said at least two control laws NG1 and NG2 being different from one another and dependent on said measurement of said engine torque TQ, a first control law NG1 being implemented at least when said measurement of said engine torque TQ is less than said first threshold value TQ1 and a second control law NG2 being implemented at least when said measurement of said engine torque TQ is greater than said second threshold value TQ2.

2. Device according to claim 1, **characterised in that** said first threshold value TQ1 is between 5 and 15% of a maximum torque value TQmax that can be generated by said at least one turboshaft engine (5).

3. Device according to either claim 1 or claim 2, **characterised in that** said second threshold value TQ2 is between 10 and 20% of a maximum torque value TQmax that can be generated by said at least one turboshaft engine (5).

4. Device according to any of claims 1 to 3, **characterised in that** said regulation device (1) implements said first control law NG1 when said measurement of said engine torque TQ falls below said first threshold value TQ1 and as long as said measurement of said engine torque TQ remains below said second threshold value TQ2.

5. Device according to any of claims 1 to 4, **characterised in that** said regulation device (1) implements said second control law NG2 when said measurement of said engine torque TQ exceeds said second threshold value TQ2 and as long as said measurement of said engine torque TQ remains above said first threshold value TQ1.

6. Rotorcraft (3) comprising:
- at least one main rotor (2) for generating at least lift and/or propulsion of said rotorcraft (3) in the air,
- a member (6) for controlling a collective pitch of the blades (7) of said at least one main rotor (2), said control member (6) allowing a control setpoint Cp of said collective pitch to be generated in order to collectively control an angular orientation of the blades (7) with respect to a hub (10) of said at least one main rotor (2),
- at least one turboshaft engine (5) that can rotate said at least one main rotor (2), said at least one turboshaft engine (5) at least temporarily producing an engine torque TQ that is transmitted to said at least one main rotor (2), said engine torque TQ being variable according to said control setpoint Cp of said collective pitch of the blades (7) of said at least one main rotor (2),
- measuring means (8) for taking, at any time, a measurement of said engine torque TQ transmitted by said at least one turboshaft engine (5) to said at least one main rotor (2), and
- a regulation device (1) that generates at least one law for controlling a control setpoint of a rotational speed, referred to as rotational speed NG, of a shaft (9) of a gas generator (4) of said at least one turboshaft engine (5), said at least one law for controlling said control setpoint of the rotational speed NG being dependent on a travel speed V of said rotorcraft (3) in a substantially horizontal direction Y and on a height z of said rotorcraft (3) with respect to the ground S,
**characterised in that** said device (1) for regulating the rotational speed NG is a device according to any of claims 1 to 5.

7. Method (20) for regulating a rotational speed, referred to as rotational speed NG, of a shaft (9) of a gas generator (4) of at least one turboshaft engine (5) of a rotorcraft (3), said rotorcraft (3) comprising:
- at least one main rotor (2) for generating at least lift and/or propulsion of said rotorcraft (3) in the air,
- a member (6) for controlling a collective pitch of the blades (7) of said at least one main rotor (2), said control member (6) allowing a control setpoint Cp of said collective pitch to be generated in order to collectively control an angular orientation of the blades (7) with respect to a hub (10) of said at least one main rotor (2),
- at least one turboshaft engine (5) that can rotate said at least one main rotor (2) in order to generate at least lift and/or propulsion of said rotorcraft (3), said at least one turboshaft engine (5) at least temporarily producing an engine torque TQ that is transmitted to said at least one main rotor (2), said engine torque TQ being variable according to said control setpoint Cp of said collective pitch of the blades (7) of said at least one main rotor (2), and
- measuring means (8) for taking, at any time, a measurement of said engine torque TQ transmitted by said at least one turboshaft engine (5) to said at least one main rotor (2),
said regulation method (20) generating at least one law for controlling a control setpoint of said rotational speed NG of said shaft (9) of said gas generator (4) of said at least one turboshaft engine (5), said at least one law for controlling said control setpoint of the rotational speed NG being dependent on a travel speed V of said rotorcraft (3) in a substantially horizontal direction and on a height z of said rotorcraft (3) with respect to the ground S,
**characterised in that** said regulation method (20) implements:
- a storage step (21) for storing a first threshold value TQ1 of said engine torque and a second threshold value TQ2 of said engine torque in at least one storage unit (12), said second threshold value TQ2 being selected so as to be greater than said first threshold value TQ1,
- a receiving step (22) for receiving said measurement of said engine torque TQ that was carried out by said measuring means (8),
- a comparison step (23) for comparing said measurement of said engine torque TQ with said first and second threshold values TQ1 and TQ2, and
- a generation step (24) for generating at least two laws NG1 and NG2 for controlling said control setpoint of rotational speed NG, said at least two control laws NG1 and NG2 being different from one another and being dependent on said measurement of said engine torque TQ, a first control law NG1 being implemented at least when said measurement of said engine torque TQ is less than said first threshold value TQ1 and a second control law NG2 being implemented at least when said measurement of said engine torque TQ is greater than said second threshold value TQ2.

8. Method according to claim 7, **characterised in that** said first threshold value TQ1 is between 5 and 15% of a maximum torque value TQmax that can be generated by said at least one turboshaft engine (5).

9. Method according to either claim 7 or claim 8, **characterised in that** said second threshold value TQ2 is between 10 and 20% of a maximum torque value TQmax that can be generated by said at least one turboshaft engine (5).

10. Method according to any of claims 7 to 9, **characterised in that** said regulation method (20) implements said first control law NG1 when said measurement of said engine torque TQ falls below said first threshold value TQ1 and as long as said measurement of said engine torque TQ remains below said second threshold value TQ2.

11. Method according to any of claims 7 to 10, **characterised in that** said regulation method (20) implements said second control law NG2 when said measurement of said engine torque TQ exceeds said second threshold value TQ2 and as long as said measurement of said engine torque TQ remains above said first threshold value TQ1.
